Europäisches Patentamt

European Patent Office

Office européen des brevets

(19)

(11) Veröffentlichungsnummer: **0 068 383**
**B1**

# (12) EUROPÄISCHE PATENTSCHRIFT

(45) Veröffentlichungstag der Patentschrift:
08.05.85

(21) Anmeldenummer: 82105423.6

(22) Anmeldetag: 21.06.82

(51) Int. Cl.⁴: **C 08 G 18/62,** C 09 D 3/72,
C 09 D 3/80

(54) Verfahren zur Herstellung von Überzügen.

(30) Priorität: 30.06.81 DE 3125569

(43) Veröffentlichungstag der Anmeldung:
05.01.83 Patentblatt 83/1

(45) Bekanntmachung des Hinweises auf die Patenterteilung:
08.05.85 Patentblatt 85/19

(84) Benannte Vertragsstaaten:
AT BE DE FR GB IT NL

(56) Entgegenhaltungen:
FR - A - 1 594 941
FR - A - 2 193 862
FR - A - 2 295 048

(73) Patentinhaber: BAYER AG, Konzernverwaltung RP
Patentabteilung, D-5090 Leverkusen 1 Bayerwerk (DE)

(72) Erfinder: Probst, Joachim, Dr., Haferkamp 3,
D-5000 Köln 80 (DE)
Erfinder: Riberi, Bernd, Dr., Jakob Böhmestrasse 2,
D-5000 Köln 80 (DE)
Erfinder: Kolb, Günter, Dr.,
Heinrich-von-Kleist-Strasse 7, D-5090 Leverkusen (DE)
Erfinder: Höhlein, Peter, Dr., Windmühlenweg 3a,
D-4152 Kempen 3 (DE)

**Beschreibung**

Die vorliegende Erfindung betrifft ein Verfahren zur Herstellung von Überzügen unter Verwendung von Beschichtungsmitteln, welche als Bindemittel gut verträgliche und ausgezeichnet pigmentierbare Gemische aus Lackpolyisocyanaten mit ausgewählten Polyhydroxypolyacrylaten enthalten.

In der DE-OS 2 460 329 bzw. der GB-PS 1 515 868 ist ein Verfahren zur Herstellung von niedermolekularen, d. h. ein Molekulargewicht von ca. 500 bis 2000 aufweisenden Acrylatharzen beschrieben, die durch radikalische Copolymerisation in Masse oder einem organischen Lösungsmittel bzw. Lösungsmittelgemisch bei Temperaturen von 80 bis 120°C hergestellt werden. Die genannten, aus 10 bis 50 Gew.-Teilen eines Hydroxyalkylesters der Acrylsäure oder Methacrylsäure, 0 bis 80 Gew.-Teilen Styrol bzw. dessen Derivaten, 10 bis 90 Gew.-Teilen eines (Meth)-Acrylsäureesters mit 1 bis 12 C-Atomen im Alkoholrest und 0 bis 50 Gew.-Teilen einer $\alpha,\beta$-monoolefinisch ungesättigten Mono- oder Dicarbonsäure mit 3 bis 5 C-Atomen bestehenden Acrylharze ergeben in Verbindung mit einigen Di- und Polyisocyanaten Lacke, die sich für die 2-Komponentenlackierung eignen. Nachteilig bei diesen Harzen ist jedoch die zum Teil schlechte Verträglichkeit mit einer Reihe von Polyisocyanaten, die sich schon beim Zusammengeben der beiden Lackkomponenten sowohl durch eine Trübung der Mischlösung als auch eine Trübung im getrockneten, ausgehärteten Lackfilm bemerkbar machen kann. Relativ schlecht ist auch meist die Verträglichkeit mit einer Reihe von Cellulosederivaten, die den Lacken oft als Verlaufmittel bzw. als zusätzliche Lackkomponente zugesetzt werden.

Weiterhin ist die meist schlechte Pigmentbenetzbarkeit dieser Lackmischungen von großem Nachteil; aus diesem Grund sind pigmentierte ausgehärtete Lackfilme auf dieser Basis im allgemeinen nicht oder nur wenig glänzend und aufgrund der nicht-homogenen Verteilung der Pigmentartikel ungleichmäßig im Aussehen.

In den US-PS 3 002 959 und 3 375 227 sowie in der DE-AS 1 038 754 werden ebenfalls Hydroxylgruppen aufweisende Polyacrylatharze bzw. Verfahren zu ihrer Herstellung beschrieben, die mit Vernetzern, u. a. mit Diisocyanaten, zu Lackschichten ausgehärtet werden können. Irgendwelche konkreten Hinweise, wie die obengenannten Schwierigkeiten, insbesondere bei Verwendung von höher als difunktionellen, Biuret-, Urethan- oder Isocyanuratgruppen aufweisenden Polyisocyanaten als Vernetzer behoben werden können, sind diesen Patentschriften nicht zu entnehmen.

Es war daher die Aufgabe der vorliegenden Erfindung, ein neues Verfahren zur Herstellung von Überzügen zur Verfügung zu stellen, bei welchen Bindemittel auf Basis von Lackpolyisocyanaten und Hydroxylgruppen aufweisenden Polyacrylatharzen zum Einsatz gelangen, die nicht mit den genannten Nachteilen behaftet sind. Diese Aufgabe konnte durch das nachstehend näher beschriebene erfindungsgemäße Verfahren gelöst werden.

Gegenstand der Erfindung ist ein Verfahren zur Herstellung von Überzügen durch Beschichtung beliebiger Substrate mit einem zu einer Polyurethanlackschicht aushärtenden Beschichtungsmittel, welches

a) als Bindemittel im wesentlichen ein Gemisch aus
    aa) gegebenenfalls in mit Blockierungsmittel für Isocyanatgruppen blockierter Form vorliegenden, Biuret-, Urethan- oder Isocyanuratgruppen aufweisenden, Lackpolyisocyanaten und
    ab) Polyhydroxypolyacrylatharzen, sowie
b) gegebenenfalls die in der Polyurethanlacktechnologie üblichen Hilfs- und Zusatzmittel

enthält, dadurch gekennzeichnet, daß man als Polyhydroxypolyacrylatharze Copolymerisate aus

A) 10 bis 20 Gew.-Teilen 2-Hydroxyethyl(meth)acrylat, 2- bzw. 3-Hydroxypropyl(meth)acrylat und/oder Hydroxybutyl(meth)acrylat,
B) 55 bis 80 Gew.-Teilen Methylmethacrylat,
C) 8 bis 30 Gew.-Teilen 2-Ethylhexylacrylat und
D) 0 bis 2 Gew.-Teilen (Meth)acrylsäure,

für welche die Summe der Gewichtsteile A) bis D) 100 beträgt, deren mittels Gelpermeationschromatographie gemessenes mittleres Molekulargewicht $M_{GPC}$ zwischen 30 000 und 80 000 liegt, deren Anteil an niedermolekularen Bestandteilen mit Molekulargewichten von max. 3000 bei 3 bis 15 Gew.-%, bezogen auf die Gesamtmenge des Copolymerisats liegt, deren molekulare Uneinheitlichkeit $U = M_w / M_n - 1$ bei 1,0 bis 10,0 liegt, und deren Parameter $\sigma_i$ für die chemische Heterogenität des Copolymerisats zwischen 0 und 0,06 liegt, verwendet.

Beim erfindungsgemäßen Verfahren werden als Bindemittelkomponente aa) Lackpolyisocyanate, d. h. insbesondere Biuret-, Urethan- oder Isocyanuratgruppen aufweisende Polyisocyanate einer über 2, vorzugsweise zwischen 2,5 und 6 liegenden mittleren NCO-Funktionalität eingesetzt. Diese Polyisocyanate weisen vorzugsweise aromatisch, cycloaliphatisch oder aliphatisch gebundene Isocyanatgruppen auf. Für lichtechte Beschichtungen werden Polyisocyanate mit aliphatisch und/oder cycloaliphatisch gebundenen Isocyanatgruppen bevorzugt. Die erfindungsgemäß einzusetzenden Lackpolyisocyanate werden durch an sich bekannte Modifizierung von einfachen organischen Diisocyanaten unter Biuret-, Urethan- oder Isocyanuratbildung hergestellt, wobei jeweils nach der Modifizierungsreaktion evtl. noch vorliegende Überschüsse an nicht-modifiziertem monomerem Ausgangsisocyanat in an sich bekannter Weise, vorzugsweise durch Destillation, so weit entfernt werden, daß in den erfindungsgemäß einzusetzenden Lackpolyisocyanaten höchstens 0,7, vorzugsweise 0,5 Gew.-% an überschüssigem Diisocyanat vorliegen. Die erfindungsgemäß einzusetzenden Lackpolyisocyanate weisen im allgemeinen einen NCO-Gehalt bezogen auf Feststoff im Bereich von 10 bis 30 Gew.-% auf.

Geeignete Diisocyanate zur Herstellung der Lackpolyisocyanate sind beispielsweise 2,4- und/oder 2,6-Diisocyanatotoluol, 2,4'-Diisocynato-dicyclohexylmethan, 4,4'-Diisocyanato-dicyclohexylmethan, Hexamethylen-diisocyanat oder 1-Isocyanato-3,3,5-trimethyl-5-isocyanatomethyl-cyclohexan (IPDI), 2,4-Diisocyanatotoluol, Hexamethylendiisocyanat und IPDI stellen die bevorzugten Diisocyanate zur Herstellung der erfindungsgemäß einzusetzenden Lackpolyisocyanate dar. Die Herstellung der Lackpolyisocyanate aus den beispielhaft genannten Ausgangsdiisocyanaten erfolgt nach bekannten Methoden des Standes der Technik. So kann beispielsweise die Herstellung der Biuretgruppen aufweisenden Lackpolyisocyanate nach dem Verfahren der US-Patentschriften 3 124 605, 3 358 010, 3 903 126, 3 903 127 oder 3 976 622 erfolgen. Die Herstellung von erfindungsgemäß einsetzbaren Urethanpolyisocyanaten geschieht beispielsweise gemäß US-PS 3 183 112, während die Herstellung von Isocyanuratgruppen aufweisenden, erfindungsgemäß geeigneten Lackpolyisocyanaten, beispielsweise nach den Verfahren der GB-PSen 1 060 430, 1 234 972, 1 506 373 oder 1 458 564 bzw. gemäß US-PS 3 394 111, US-PS 3 645 979 oder US-PS 3 919 218 erfolgt.

Zu den besonders bevorzugten Lackpolyisocyanaten gehören die Biuretgruppen aufweisenden Polyisocyante gemäß US-PS 3 124 605, insbesondere jene auf Basis von Hexamethylendiisocyanat, die Urethangruppen aufweisenden Polyisocyanate gemäß US-PS 3 183 112, insbesondere jene auf Basis von 2,4-Diisocyanatotoluol, Trimethylolpropan und den verschiedenen Butandiolen, sowie die bekannten Isocyanuratgruppen aufweisenden Polyisocyanate auf Basis von 2,4-Diisocyanatotoluol, Hexamethylendiisocyanat, IPDI, Gemischen von 2,4-Diisocyanatotoluol mit Hexamethylendiisocyanat oder Gemischen von Hexamethylendiisocyanat mit IPDI.

Bei der erfindungswesentlichen Bindemittelkomponente ab) handelt es sich um Polyhydroxypolyacrylate auf Basis ausgewählter, obengenannter Monomerer. Vorzugsweise handelt es sich bei der Bindemittelkomponente ab) um Copolymerisate aus

$A_1$ 11 bis 19 Gew.-Teilen 2-Hydroxyethyl(meth)acrylat, 2- bzw. 3-Hydroxypropyl(meth)acrylat und/ oder Hydroxybutyl(meth)acrylat,
$B_1$ 60 bis 75 Gew.-Teilen Methylmethacrylat,
$C_1$ 10 bis 25 Gew.-Teilen 2-Ethylhexylacrylat und
$D_1$ 0,5 bis 1,5 Gew.-Teilen (Meth)acrylsäure,

wobei die Summe der Gewichtsteile $A_1$ bis $D_1$, ebenso wie die Summe der o. g. Gewichtsteile A bis D, 100 beträgt.

Die Hydroxyalkyl(meth)acrylate (A) dienen zum Einbau der gegenüber Isocyanatgruppen reaktionsfähigen Hydroxylgruppen, Methylmethacrylat (B) trägt zur Erhöhung der Glasübergangstemperatur und somit zur Erhöhung der Härte der erfindungsgemäßen Beschichtungen bei, 2-Ethylhexylacrylat (C) dient zur Elastifizierung der Harze, Acrylsäure oder Methacrylsäure (D) können zur Erhöhung der Reaktivität der Copolymeren beitragen.

Die erfindungsgemäß einzusetzenden Polyacrylatharze ab) weisen im allgemeinen ein mittels der Gelpermationschromatographie bestimmtes mittleres Molekulargewicht $M_{GPC}$ von 30 000 bis 80 000, vorzugsweise 40 000 bis 70 000, auf. Die $M_{GPC}$-Werte können hierbei leicht nach einer universellen Methode von H.Benoit et al (Z. Grubisic, P. Rempp und H. Benoit, J. Polymer Sci. Teil B, Polym. Lett. 5 (1967), S. 753) berechnet werden. Kleinere Molgewichte $M_{GPC}$ als 30 000 sind zu vermeiden, da hierbei in Kombination mit Lackpolyisocyanaten spröde, unelastische Lackfilme resultieren können. Dies trifft insbesondere bei Verwendung der Isocyanuratgruppen aufweisenden Polyisocyanate zu. Höhere mittlere Molgewichte als 80 000 sind ebenfalls von Nachteil, da hierbei die Lösungsviskositäten zu hoch werden und die Standzeiten zusammen mit dem Polyisocyanatvernetzer im allgemeinen zu kurz sind. Weiterhin sollen die erfindungsgemäßen Polyacrylate einen niedermolekularen Anteil von etwa 3 bis 15 Gew.-%, vorzugsweise 5 bis 10 Gew.-%, bezogen auf das Festharz, enthalten. Dieser niedermolekulare Anteil liegt in einem Molgewichtsbereich von 3000 und darunter. Hierdurch wird die Verträglichkeit zwischen Acrylatharz und Vernetzer entscheidend verbessert. Die molekulare Uneinheitlichkeit $U = Mw/Mn - 1$ wird wegen des Vorliegens dieser verträglichkeitsverbessernden niedermolekularen Anteile relativ groß und liegt bei Werten von 1,0 bis 10,0, vorzugsweise 2,0 bis 6,0.

Die Lösungsviskositäten der 50 bis 55gew.-%igen Harzlösungen liegen im allgemeinen bei 2000 bis 30 000 mPa · s, vorzugsweise bei 3000 bis 10 000 mPa · s.

Die Bestimmung der Heterogenität der chemischen Zusammensetzung kann durch Probenentnahme während der Polymerisation und anschließender Bestimmung der Zusammensetzung durch Elementaranalyse, durch OH-Zahl-Bestimmung etc. erfolgen. Auch durch Fällungsfraktionierung, z. B. mit dem Lösungsmittel/Fällungsmittel-System Aceton/Petrolether ist eine Charakterisierung der chemischen Heterogenität möglich. Die sowohl mittels der gemessenen Copolymerisationsparameter be-

3

rechneten als auch die experimentell gefundenen Heterogenitätsparameter $\sigma_i$ liegen hierbei zwischen 0 und 0,06, vorzugsweise bei 0,01 bis 0,05. Hierbei sind die $\sigma_i$-Parameter für jedes Comonomere im Copolymerisat definiert; $\sigma_i$ ist ein Maß für die Streuung und in der Literatur definiert (H.-G. Elias, Makromol. Chem. 104 (1967), S. 142). Die erfindungsgemäß einzusetzenden Polyacrylatharze ab) weisen OH-Zahlen im Bereich von 40 bis 90 mg KOH/g Festharz, vorzugsweise 45 bis 82, auf. Die Säurezahlen liegen bei 0 bis 16 mg KOH/g Festharz, vorzugsweise 3 bis 12.

Die Herstellung der so definierten Polyacrylatharze erfolgt nach dem bekannten kontinuierlichen Polymerisationsverfahren oder insbesondere nach dem bekannten Zulaufpolymerisationsverfahren. Bei diesem letztgenannten Verfahren wird im allgemeinen ein Teil bzw. das gesamte Lösungsmittel oder Lösungsmittelgemisch im Reaktionskolben vorgelegt, auf die Reaktionstemperatur erhitzt und das Monomergemisch zusammen mit dem Initiator im allgemeinen gleichmäßig und gleichzeitig zudosiert. Stationäre Bedingungen wie in einem kontinuierlich geführten Polymerisationsprozeß liegen hierbei im allgemeinen nicht vor; erst gegen Ende des Zulaufprozesses können sich in vielen Fällen nahezu stationäre Bedingungen einstellen. Ist das Zulaufverfahren beendet, ist der weitere Polymerisationsverlauf ähnlich dem beim Endstadium einer Batch-Polymerisation. Meist ist das Zulaufverfahren bei einem Umsatz von ca. 80 bis 95% beendet, so daß die Batch-Phase gegenüber der Zulaufphase fast zu vernachlässigen ist. Chemisch einheitlich aufgebaute Copolymerisate wie im Falle eines kontinuierlich durchgeführten Polymerisationsprozesses entstehen in der Regel nicht, jedoch ist der chemische Aufbau der Copolymeren im allgemeinen sehr viel regelmäßiger als im Batch-Fall.

Die Polymerisationsgeschwindigkeit der einzelnen Monomeren und die Zerfallgeschwindigkeit der Initiatoren ändern sich bei Temperaturänderungen unterschiedlich stark. Daher führen schon relativ kleine Temperaturänderungen zu einer empfindlichen Störung der Reaktionsbedingungen. Bei allen Polymerisationsverfahren ist daher eine gute Temperaturkonstanz nötig.

Geeignete Initiatoren zur Herstellung der Polyacrylatharze sind solche Verbindungen, die in einer Reaktion erster Ordnung thermisch in Radikale zerfallen. Die Halbwertszeiten des Radikalzerfalls geeigneter Initiatoren sollten bei 80 bis 160°C zwischen 0,01 und 100 Minuten liegen. Im allgemeinen erfolgt die Copolymerisationsreaktion im zuletztgenannten Temperaturbereich, vorzugsweise zwischen 100 und 160°C, unter einem Druck von $10^3$ bis $2 \times 10^4$ mbar, wobei sich die genaue Temperatur nach der Art des Initiators richtet. Die Initiatoren werden in Mengen von 0,05 bis 3 Gew.-%, vorzugsweise von 0,1 bis 2 Gew.-%, bezogen auf die Gesamtmenge an Monomeren, eingesetzt. Im allgemeinen werden die eingesetzten Monomeren zu mindestens 98% umgesetzt.

Geeignete Initiatoren sind z. B. symmetrische aliphatische Azoverbindungen wie Azoisobutyronitril, Azo-bis-2-methylvaleronitril, 1,1'-Azo-bis-1-cyclohexannitril und 2,2'-Azo-bis-isobuttersäurealkylester, symmetrische Diacylperoxide wie z. B. Acetyl-, Propionyl- oder Butyryl-peroxid, Brom-, Nitro-, Methyl- oder Methyl-Gruppen-substituierte Benzoylperoxide sowie Lauroylperoxid, symmetrische Peroxydicarbonate wie z. B. Diethyl-, Diisopropyl-, Dicyclohexyl- sowie Dibenzylperoxydicarbonat, tert.-Butylperpivalat, tert.-Butyl-peroctoat oder tert.-Butylphenylperacetat, sowie Peroxycarbamate wie tert.-Butyl-N-(phenylperoxy)-carbamat oder tert.-Butyl-N-(2,3- oder 4-chlor-phenylperoxy)carbamat; weitere Peroxide sind: tert.-Butyl-hydroperoxid, Di-tert.-butylperoxid, Cumolhydroperoxid, Di-Cumylperoxid.

Die Polymerisation kann in Lösung oder Substanz durchgeführt werden. Bevorzugt wird, wie oben dargelegt, in Lösung polymerisiert. Als Lösungsmittel kommen beispielsweise Aromaten wie Benzol, Toluol, Xylol, Chlorbenzol, Ester wie Butylacetat, Ethylacetat, Ethylglykolacetat, Methylglykolacetat, Ether wie Butylglykol, Tetrahydrofuran, Dioxan, Ethylglykolether, Ketone wie Aceton, Methylethylketon, halogenhaltige Lösungsmittel wie Methylenchlorid, Trichlormonofluorethan oder Gemische derartiger Lösungsmittel in Betracht.

Nach erfolgter Copolymerisationsreaktion werden im allgemeinen noch verbleibende Spuren leicht flüchtiger Monomerer durch »Andestillieren« des Copolymerisationsansatzes entfernt, wobei jedoch die Hauptmenge der Lösungsmittel im Reaktionsansatz verbleibt, der auf diese Weise als einsatzbereite Lösung in den genannten Lösungsmitteln anfällt.

Hieraus geht auch hervor, daß als Lösungsmittel vorzugsweise Lacklösungsmittel eingesetzt werden. Selbstverständlich ist es auch möglich, die Copolymerisationsreaktion lösungsmittelfrei durchzuführen und Lösungsmittel anschließend dem Copolymerisat zuzugeben. Andererseits kann das erfindungsgemäße Verfahren auch lösungsmittelfrei durchgeführt werden, so daß gegebenenfalls bei der Copolymerisationsreaktion eingesetztes Lösungsmittel vor der erfindungsgemäßen Verwendung der Copolymerisate destillativ entfernt werden muß. In einem solchen Falle empfiehlt sich selbstverständlich, bereits die Herstellung der Copolymerisate lösungsmittelfrei durchzuführen.

Die Copolymerisate können im Anschluß an die Polymerisation nach bekannten Verfahren, z. B. durch Umsetzung mit Glycid oder Glycidestern, Carbonsäureanhydrid wie Phthalsäureanhydrid, durch Veresterung oder Umesterung mit Carbonsäuren bzw. Carbonsäureestern wie Benzoesäure, Ethylhexansäure, Fettsäuren oder Ölsäure modifiziert werden. Durch diese Modifizierung können gewisse Eigenschaften wie Pigmentverträglichkeit, Haftung und Alkalibeständigkeit verbessert werden.

Vorzugsweise werden beim erfindungsgemäßen Verfahren jedoch die unmodifizierten Polyhydroxypolyacrylatharze eingesetzt, da deren Kombinationen mit den genannten Lackpolyisocyanaten bereits eine ausgezeichnete Pigmentbenetzbarkeit aufweisen, was sich u. a. darin äußert, daß die erfindungsgemäß hergestellten, ausgehärteten Lackfilme eine gleichmäßige, hochglänzende Oberfläche aufweisen.

Die erfindungsgemäß einzusetzenden Beschichtungsmittel können neben den bereits genannten Lösungsmitteln weitere in der Polyurethanlacktechnologie übliche Hilfs- und Zusatzmittel wie z. B. Verlaufmittel auf Celluloseesterbasis, Oligoalkylacrylate, Siliconöle, Weichmacher wie Phosphorsäureester, Phthalsäureester, Pigmente und Füllstoffe, viskositätskontrollierende Zusätze wie Bentonite und Kieselsäureester, Mattierungsmittel, Härtungsbeschleuniger wie Mangan-, Blei- oder Kobaltnaphthenate sowie Zinnbeschleuniger, Calciumsalze, Basen wie Diazabicyclooctan, Säuren wie Phosphorsäure, ethanolische Salzsäure, Weinsäure oder Zitronensäure in Mengen von ca. 0,1 bis 30 Gew.-%, bezogen auf die Gesamtmenge des Beschichtungsmittels, enthalten.

Im übrigen werden die Mengenverhältnisse der einzelnen Bestandteile der erfindungsgemäß einzusetzenden Beschichtungsmittel so gewählt, daß für jede Hydroxylgruppe der im Reaktionsgemisch vorliegenden, Hydroxylgruppen aufweisenden Komponenten, 0,2 bis 5, vorzugsweise 0,7 bis 1,3, Isocyanatgruppen zur Verfügung stehen. Grundsätzlich ist es auch möglich, die Isocyanatkomponente aa) in mit Blockierungsmittel für Isocyanatgruppen wie z. B. Phenolen, $\varepsilon$-Caprolactam, Malonsäurediethylester oder Acetessigsäureethylester blockierter Form einzusetzen, so daß es sich bei den erfindungsgemäß einzusetzenden Beschichtungsmitteln um Hitze-vernetzbare Einbrennlacke handelt.

Bei der Durchführung des erfindungsgemäßen Verfahrens können die erfindungsgemäß einzusetzenden Beschichtungsmittel nach allen beliebigen Methoden der Lacktechnologie wie z. B. Spritzen, Streichen, Tauchen, Gießen oder Walzen auf beliebige Substrate wie z. B. Metalle, Holz, Mauerwerk, Beton, Glas, Keramik, Kunststoffe, Textilien oder Papier aufgetragen werden. Ein besonders bevorzugtes Substrat ist Holz. Die erfindungsgemäß zum Einsatz gelangenden Beschichtungsmittel zeichnen sich durch ein langes »pot life«, sehr schnelle Trocknungszeiten auch schon bei Temperaturen von 10 bis 60°C, guten Verlauf, sowie Farbtreue bzw. Klarheit und hervorragende mechanische Eigenschaften der mit ihnen erhaltenen Beschichtungen aus. Auffallend ist die hervorragende Haftung auf Eisen und anderen Metallen, wie z. B. Aluminium und Zink, sowie die gute Haftung auf Kunststoffen.

Die nachstehenden Beispiele dienen der näheren Erläuterung der Erfindung. Alle Prozentangaben beziehen sich auf Gewichtsprozente.

Beispiele 1 bis 4

(Herstellung von erfindungsgemäß geeigneten Polyacrylatharzen)

In einem sauerstofffreien 40 l Autoklaven werden 6130 g Xylol und 6520 g Ethylglykolacetat (EGA) vorgelegt und auf 140°C erwärmt. Bei dieser Temperatur, die konstant gehalten wird, werden die Lösungen der in Tabelle 1 angegebenen Zusammensetzungen innerhalb von 4 Stunden gleichmäßig unter Luftausschluß zudosiert. Zur Nachaktivierung werden 36 g Di-t-butylperoxid in 387 g Xylol zugegeben. Man rührt 6 bis 8 Stunden bei 140°C nach und entfernt anschließend destillativ im Wasserstrahlvakuum flüchtige Restmonomere, insbesondere Methylmethacrylate sowie geringe Mengen des Lösungsmittelgemisches.

Die physikalisch-chemischen Eigenschaften der Acrylharzlösungen sind ebenfalls in Tabelle 1 aufgelistet.

Tabelle 1

|  | Beispiel |  |  |  |
| --- | --- | --- | --- | --- |
|  | 1 | 2 | 3 | 4 |
| 2-Hydroxyethylmethacrylat (g) | 2088 | 2088 | 2088 | 2088 |
| Methacrylsäuremethylester (g) | 7839 | 8623 | 9015 | 9407 |
| 2-Ethylhexylacrylat (g) | 3005 | 2221 | 1829 | 1437 |
| Acrylsäure (g) | 132 | 132 | 132 | 132 |
| Di-t-butylperoxid (g) | 93 | 93 | 133 | 200 |
| Umsatz (Gew.-%) | 99,4 | 99,2 | 98,8 | 99,5 |
| Konzentration (Gew.-%) | 54,6 | 52,8 | 52,3 | 51,9 |
| OH-Zahl (mg KOH/g Lösung) | 38,9 | 37,7 | 34,2 | 34,8 |

Tabelle 1 (Fortsetzung)

| | Beispiel 1 | 2 | 3 | 4 |
|---|---|---|---|---|
| Säurezahl (mg KOH/g Lösung) | 4,9 | 4,6 | 5,6 | 4,8 |
| Viskosität (mPa · s) bei 20° C | 8900 | 15 600 | 4500 | 5450 |
| Molgewicht $M_{GPC}$ (mittels GPC gemessen) | 47 700 | 63 500 | 45 000 | 43 000 |
| Schätzwert für $U = \dfrac{Mw}{Mn} - 1$ | 4,1 | 3,9 | 3,7 | 3,8 |
| $\sigma$ (Hydroxyethylmethacrylat) | 0,0324 | 0,0317 | 0,0313 | 0,0303 |
| $\sigma$ (Methylmethacrylat) | 0,0362 | 0,0376 | 0,0388 | 0,0334 |
| $\sigma$ (Ethylhexylacrylat) | 0,0254 | 0,0168 | 0,0109 | 0,0139 |

Nachstehend wird die Herstellung einiger erfindungsgemäß geeigneter Beschichtungsmittel bzw. ihre Verwendung gezeigt. Zum Vergleich wurde ein Acrylatharz gemäß DE-OS 2 460 329 herangezogen. In den nachstehenden Beispielen wurden folgende Ausgangsmaterialien eingesetzt:

Acrylharz 1: entsprechend Beispiel 1
Acrylharz 2: entsprechend Beispiel 2
Acrylharz 3: entsprechend Beispiel 3
Acrylharz 4: entsprechend Beispiel 4
Acrylharz 5
(Vergleich): Copolymerisat bestehend aus:
Acrylsäure, 2-Hydroxypropylmethacrylat, n-Butylacrylat, Styrol und Methylmethacrylat als 60%ige Lösung in Xylol, OH-Zahl: ca. 50 bis 52, Viskosität/25°C: ca. 2000 mPa · s

In den nachfolgenden Beispielen verwendete Härter:

Polyisocyanat I
50gew.-%ige Lösung in Butylacetat eines in Analogie zu Beispiel 3 der US-PS 3 394 111 hergestellten, Isocyanuratgruppen aufweisenden Polyisocyanats auf Basis von 2,4-Diisocyanatotoluol. NCO-Gehalt: 8%.

Polyisocyanat II
Ein in Analogie zu Beispiel 1 der US-PS 3 645 979 hergestelltes Isocyanuratgruppen aufweisendes Polyisocyanat auf Basis von 2,4-Diisocyanatotoluol und Hexamethylendiisocyanat (60gew.-%ige Lösung in Butylacetat); NCO-Gehalt der Lösung: 10,5%.

Polyisocyanat III
75%ige Lösung in Ethylacetat eines durch Umsetzung von überschüssigen Mengen an 2,4-Diisocyanatotoluol mit Trimethylolpropan und anschließender destillativer Entfernung des überschüssigen Diisocyanats hergestellten, Urethangruppen aufweisenden Polyisocyanats. NCO-Gehalt der Lösung: 13 Gew.-%.

Polyisocyanat IV
75gew.-%ige Lösung eines Biuretgruppen aufweisenden Polyisocyanats in Xylol/Ethylglykolacetat (1 : 1) auf Basis von Hexamethylendiisocyanat. NCO-Gehalt der Lösung: 16,5%.

Beispiel 5

Verträglichkeit der Acrylharze mit verschiedenen Cellulosederivaten

Als Cellulosederivate werden ein Cellulosepropionat (P) und ein -acetobutyrat (AB) eingesetzt. Die Viskositäten ihrer 20gew.-%igen acetonischen Lösungen liegen bei 150 bis 200 mPa · s (P) bzw. bei 700 bis 2000 mPa · s (AB) Für den Vergleichsversuch wurden das Acrylatharz 3 und die Vergleichssub stanz (Acrylatharz 5) in Form der beschriebenen Lösungen herangezogen. Die Cellulosederivate P und AB werden in Form ihrer 17%igen Lösung in Methylethylketon eingesetzt. Die Verträglichkeit wird sowohl in der Lösung (L) als auch im Film (F) getestet.

Gew.-Verhältnis Acrylatharz : Cellulosederivat (fest : fest)

|  | 10 : 1 | | 10 : 3 | | 10 : 5 | |
|  | L | F | L | F | L | F |
|---|---|---|---|---|---|---|
| Acrylharz 3 mit | | | | | | |
| P | + | + | + | + | + | + |
| AB | + | + | + | + | + | + |
| Acrylharz 5 mit | | | | | | |
| P | – | – | + | – | + | – |
| AB | – | – | + | – | + | – |

Kennzeichen der Verträglichkeit:

+ : verträglich;   – : nicht verträglich

Die in den nachfolgenden Beispielen beschriebenen Lacke stellten Klarlacke mit einem Feststoffgehalt von 30 bzw. 40% dar. Die zusätzliche Verdünnung erfolgte unter Verwendung eines Gemischs aus Xylol, Ethylglykolacetat, Ethylacetat und n-Butylacetat in solchen Mengenverhältnissen, daß die Lacklösungen die genannten Lösungsmittel in ungefähr gleichen Gew.-Teilen enthielten. Die einzelnen Komponenten wurden in einem NCO/OH-Äquivalentverhältnis von 1 : 1 entsprechenden Mengen eingesetzt. Lediglich bei Härter I betrug das NCO/OH-Verhältnis 0,7 : 1. Weitere Zusatzmittel wurden nicht hinzugefügt.

## Beispiel 6

### Verträglichkeit der Acrylharze in Zweikomponentenlacken mit den verschiedenen Härtern (Polyisocyanaten)

| Acrylharz | Verträglichkeit in der Lösung mit Härter I | im Film | in der Lösung mit Härter II | im Film | in der Lösung mit Härter III | im Film | in der Lösung mit Härter IV | im Film |
|---|---|---|---|---|---|---|---|---|
| 1 | + | + | + | + | + | + | + | + |
| 2 | + | + | + | + | + | + | + | + |
| 3 | + | + | + | + | + | + | + | + |
| 4 | + | + | + | + | + | + | + | + |
| 5 | = | = | = | = | – | + | + | + |

Kennzeichen der Verträglichkeit:

+ einwandfrei verträglich
– nicht verträglich; trüb
= nicht verträglich; stark trüb bis Phasentrennung

7

**0 068 383**

Beispiel 7

Standzeit und Viskositätsverhalten von Zweikomponentenlacken aus
Acrylharzen und den verschiedenen Härtern

a) mit Härter I (Festkörpergehalt: 30%)

| Acrylharz | Standzeit in Stunden | Auslaufzeit DIN-Becher 4 in s nach | | |
|---|---|---|---|---|
| | | 0 h | 4 h | 8 h |
| 1 | ~20 | 18 | 23 | 33 |
| 2 | ~20 | 19 | 26 | 38 |
| 3 | ~27 | 17 | 19 | 22 |
| 4 | ~24 | 20 | 22 | 25 |
| 5 | * | * | * | * |

* nicht meßbar, da Unverträglichkeit vorliegt (s. o.).

b) mit Härter II (Festkörpergehalt: 30%)

| Acrylharz | Standzeit in Stunden | Auslaufzeit DIN-Becher 4 in s nach | | |
|---|---|---|---|---|
| | | 0 h | 4 h | 8 h |
| 2 | ~20 | 17 | 22 | 31 |
| 3 | ~24 | 15 | 16 | 17 |
| 4 | ~20 | 18 | 21 | 25 |
| 5 | * | * | * | * |

* nicht meßbar, da Unverträglichkeit vorliegt

c) mit Härter III (Festkörpergehalt: 40%)

| Acrylharz | Standzeit in Stunden | Auslaufzeit DIN-Becher 4 in s nach | | | |
|---|---|---|---|---|---|
| | | 0 h | 4 h | 8 h | 24 h |
| 1 | ~28 | 42 | 52 | 62 | 265 |
| 2 | ~33 | 33 | 37 | 42 | 127 |
| 3 | ~40 | 25 | 26 | 30 | 59 |
| 4 | ~40 | 34 | 38 | 45 | 106 |
| 5 | ~48 | 16 | | 19 | |

0 068 383

d) mit Härter IV (Festkörpergehalt: 40%)

| Acrylharz | Standzeit in Stunden | Auslaufzeit DIN-Becher 4 in s nach | | |
|-----------|---------------------|------|------|------|
| | | 0 h | 4 h | 8 h |
| 2 | ~18 | 45 | 88 | 160 |
| 3 | ~26 | 25 | 31 | 42 |
| 4 | ~22 | 36 | 55 | 81 |
| 5 | ~60 | 17 | | 18 |

Beispiel 8

Dehnbarkeit und Pendelhärte von Zweikomponentenlacken aus Acrylharzen und den verschiedenen Härtern (Bedingungen wie bei Beispiel 7)

a) mit Härter I

| Acrylharz | Tiefung (nach Erichsen) nach 14 d in mm | Pendelhärte (nach König) in sec. | | |
|-----------|------------------------------------------|------|------|------|
| | | nach 1 d | nach 7 d | nach 14 d |
| 1 | 1,5 | 109 | 137 | 137 |
| 2 | 1,0 | 149 | 163 | 163 |
| 3 | 0,8 | 140 | 157 | 163 |
| 4 | 0,7 | 149 | 151 | 153 |
| 5 | * | * | * | * |

\* nicht meßbar wegen Unverträglichkeit

b) mit Härter II

| Acrylharz | Tiefung (nach Erichsen) nach 14 d in mm | Pendelhärte (nach König) in sec. | | |
|-----------|------------------------------------------|------|------|------|
| | | nach 1 d | nach 7 d | nach 14 d |
| 2 | 8,0 | 150 | 150 | 160 |
| 3 | 8,2 | 141 | 153 | 161 |
| 4 | 8,3 | 158 | 160 | 160 |
| 5 | * | * | * | * |

\* nicht meßbar wegen Unverträglichkeit

9

c) mit Härter III

| Acrylharz | Tiefung (nach Erichsen) nach 14 d in mm | Pendelhärte (nach König) in sec. nach 1 d | nach 7 d | nach 14 d |
|---|---|---|---|---|
| 1 | 5,7 | 56 | 125 | 128 |
| 2 | 7,5 | 110 | 152 | 154 |
| 3 | 9,0 | 113 | 152 | 160 |
| 4 | 6,2 | 121 | 153 | 153 |
| 5 | 1,0 | 130 | 190 | 195 |

d) mit Härter IV

| Acrylharz | Tiefung (nach Erichsen) nach 14 d in mm | Pendelhärte (nach König) in sec. nach 1 d | nach 7 d | nach 14 d |
|---|---|---|---|---|
| 2 | 9,3 | 71 | 123 | 129 |
| 3 | 9,0 | 78 | 140 | 141 |
| 4 | 8,4 | 84 | 126 | 128 |
| 5 | 8,9 | 130 | 190 | 195 |

Beispiel 9

Trocknung von Zweikomponentenlacken aus Acrylharzen
und den verschiedenen Härtern
(H: Handtrocknung, S: Sandtrocknung)

a) mit Härter I

| Acrylharz | Trocknung in min H | S |
|---|---|---|
| 1 | 15 | 10 |
| 2 | 20 | 15 |
| 3 | 20 | 15 |
| 4 | 20 | 15 |
| 5 | * | * |

\* nicht meßbar wegen Unverträglichkeit

b) mit Härter II

| Acrylharz | Trocknung in min | |
| --- | --- | --- |
| | H | S |
| 2 | 30 | 15 |
| 3 | 35 | 15 |
| 4 | 25 | 15 |
| 5 | * | * |

\* nicht meßbar wegen Unverträglichkeit

c) mit Härter III

| Acrylharz | Trocknung in min | |
| --- | --- | --- |
| | H | S |
| 1 | 90 | 15 |
| 2 | 120 | 15 |
| 3 | 120 | 10 |
| 4 | 110 | 10 |
| 5 | 210 | 15 |

d) mit Härter IV

| Acrylharz | Trocknung in min | |
| --- | --- | --- |
| | H | S |
| 2 | 120 | 15 |
| 3 | 120 | 20 |
| 4 | 120 | 15 |
| 5 | 480 | 24 |

**0 068 383**

Beispiel 10

Glanzverhalten von mit Titandioxid pigmentiertem Zweikomponentenlack aus Acrylharz 3 und den verschiedenen Härtern in Abhängigkeit von der Pigmentierungshöhe (Gew.-Teile Pigment: 100 Gew.-Teilen Acrylharz), Glanzmessung mit 60° -Reflektometer nach DIN 67 530, NCO/OH = 1,00.

| Pigmentierungshöhe bezogen auf Acrylatharz | 60°-Reflektometerwert nach DIN 67 530 bei stöchiometrischer Vernetzung mit | | | |
|---|---|---|---|---|
| | Härter I | Härter II | Härter III | Härter IV |
| 60 | 93 | 92 | 93 | 90 |
| 70 | 94 | 93 | 92 | 91 |
| 80 | 89 | 88 | 88 | 89 |
| 97 | 86 | 85 | 86 | 86 |

## Patentansprüche

1. Verfahren zur Herstellung von Überzügen durch Beschichtung beliebiger Substrate mit einem zu einer Polyurethanlackschicht aushärtenden Beschichtungsmittel, welches

a) als Bindemittel im wesentlichen ein Gemisch aus
    aa) gegebenenfalls in mit Blockierungsmittel für Isocyanatgruppen blockierter Form vorliegenden, Biuret-, Urethan- oder Isocyanuratgruppen aufweisenden, Lackpolyisocyanaten und
    ab) Polyhydroxypolyacrylatharzen, sowie
b) gegebenenfalls die in der Polyurethanlacktechnologie üblichen Hilfs- und Zusatzmittel

enthält, dadurch gekennzeichnet, daß man als Polyhydroxypolyacrylatharze Copolymerisate aus

A) 10 bis 20 Gew.-Teilen 2-Hydroxyethyl(meth)acrylat, 2- bzw. 3-Hydroxypropyl(meth)acrylat und/ oder Hydroxybutyl(meth)acrylat,
B) 55 bis 80 Gew.-Teilen Methylmethacrylat,
C) 8 bis 30 Gew.-Teilen 2-Ethylhexylacrylat und
D) 0 bis 2 Gew.-Teilen (Meth)acrylsäure,

für welche die Summe der Gewichtsteile A) bis D) 100 beträgt, deren mittels Gelpermeationschromatographie gemessenes mittleres Molekulargewicht $M_{GPC}$ zwischen 30 000 und 80 000 liegt, deren Anteil an niedermolekularen Bestandteilen mit Molekulargewichten von max. 3000 bei 3 bis 15 Gew.-%, bezogen auf die Gesamtmenge des Copolymerisats liegt, deren molekulare Uneinheitlichkeit $U = Mw/Mn - 1$ bei 1,0 bis 10,0 liegt, und deren Parameter $\sigma_i$ für die chemische Heterogenität des Copolymerisats zwischen 0 und 0,06 liegt, verwendet.

2. Verfahren gemäß Anspruch 1, dadurch gekennzeichnet, daß man die Mengenverhältnisse der einzelnen Komponenten des Beschichtungsmittels so wählt, daß ein Äquivalentverhältnis zwischen, gegebenenfalls blockierten, Isocyanatgruppen zu gegenüber Isocyanatgruppen reaktionsfähigen Gruppen von 0,2 : 1 bis 5 : 1 vorliegt.

3. Verfahren gemäß Anspruch 1, dadurch gekennzeichnet, daß man als Polyhydroxypolyacrylatharze Copolymerisate aus

A) 11 bis 19 Gew.-Teilen 2-Hydroxyethyl(meth)acrylat, 2- bzw. 3-Hydroxypropyl(meth)acrylat und/ oder Hydroxybutyl(meth)acrylat,
B) 60 bis 75 Gew.-Teilen Methylmethacrylat,
C) 10 bis 25 Gew.-Teilen 2-Ethylhexylacrylat und
D) 0,5 bis 1,5 Gew.-Teilen (Meth)acrylsäure

für welche die Summe der Gewichtsteile A) bis D) 100 beträgt, verwendet.

4. Verfahren gemäß Ansprüchen 1 bis 3, dadurch gekennzeichnet, daß man solche Polyhydroxypolyacrylate verwendet, deren Molekulargewicht $M_{GPC}$ zwischen 40 000 und 70 000 liegt, in denen der Anteil an niedermolekularen Bestandteilen mit einem Molekulargewicht von maximal 3000 bei 5 bis 10 Gew.-%, bezogen auf die Gesamtmenge des Copolymerisats beträgt, deren molekulare Uneinheitlichkeit U zwischen 2,0 und 6,0 liegt und für die der Parameter $\sigma_i$ zwischen 0,01 und 0,05 liegt.

## Claims

1. Process for the production of coatings by coating substrates of any type with a coating composition which hardens to form a polyurethane lacquer layer, which coating composition contains

a)  as binder essentially a mixture of
    aa) lacquer polyisocyanates containing biuret, urethane or isocyanurate groups and optionally present in a form blocked with blocking agents for isocyanate groups, and
    ab) polyhydroxy polyacrylate resins, and
b)  optionally the auxiliaries and additives customary in polyurethane lacquer technology,

characterised in that the polyhydroxy polyacrylate resins used are copolymers of

A)  10 to 20 parts by weight of 2-hydroxyethyl (meth)acrylate, 2- or 3-hydroxypropyl (meth)acrylate and/or hydroxybutyl (meth)acrylate,
B)  55 to 80 parts by weight of methyl methacrylate,
C)  8 to 30 parts by weight of 2-ethylhexyl acrylate and
D)  0 to 2 parts by weight of (meth)acrylic acid,

for which the sum of the parts by weight of A) to D) is 100, of which the average molecular weight $M_{GPC}$, measured by gel permeation chromatography, is between 30,000 and 80,000, of which the content of low molecular weight constituents having molecular weights of at most 3,000 is 3 to 15% by weight, based on the total amount of the copolymer, of which the molecular non-uniformity U = Mw/ Mn − 1 is 1.0 to 10.0, and of which the parameter $\sigma_i$ for the chemical heterogeneity of the copolymer is between 0 and 0.06.

2. Process according to Claim 1, characterised in that the quantitative ratios of the individual components of the coating composition are selected in such a way that an equivalent ratio between optionally blocked isocyanate groups and groups which are reactive to isocyanate groups, of 0.2 : 1 to 5 : 1, is present.

3. Process according to Claim 1, characterised in that the polyhydroxy polyacrylate resins used are copolymers of

A)  11 to 19 parts by weight of 2-hydroxyethyl (meth)acrylate, 2- or 3-hydroxypropyl (meth)acrylate and/or hydroxybutyl (meth)acrylate,
B)  60 to 75 parts by weight of methyl methacrylate,
C)  10 to 25 parts by weight of 2-ethylhexyl acrylate and
D)  0.5 to 1.5 parts by weight of (meth)acrylic acid,

for which the sum of the parts by weight of A) to D) is 100.

4. Process according to Claims 1 to 3, characterised in that those polyhydroxy polyacrylates are used of which the molecular weight $M_{GPC}$ is between 40,000 and 70,000, in which the content of low molecular weight constituents having a molecular weight of at most 3,000 is 5 to 10% by weight, based on the total amount of the copolymer, of which the molecular non-uniformity U is between 2.0 and 6.0 and for which the parameter $\sigma_i$ is between 0.01 and 0.05.

## Revendications

1. Procédé de fabrication de revêtements par enduction de substrats quelconques avec un agent d'enduction durcissant à fond en un enduit de vernis de polyuréthane, qui contient

a)  comme liant essentiellement un mélange
    aa) de polyisocyanates pour vernis ayant des groupes biuret, uréthane ou isocyanurate se présentant éventuellement sous une forme bloquée à l'aide des agents de blocage pour groupes isocyanate et
    ab) des résines polyacryliques polyhydroxylées, de même que
b)  éventuellement les auxiliaires et additifs en usage dans la technologie des vernis de polyuréthanes,

13

caractérisé en ce qu'on utilise comme résine polyacryliques polyhydroxylées des copolymères de

A)  10 à 20 parties en poids de (méth)acrylate de 2-hydroxyéthyle, de (méth)acrylate de 2- ou 3-hydro-
    xypropyle et/ou de (méth)acrylate d'hydroxybutyle,
B)  55 à 80 parties en poids de méthacrylate de méthyle,
C)  8 à 30 parties en poids d'acrylate de 2-éthylhexyle et
D)  0 à 2 parties en poids d'acide (méth)acrylique,

pour lesquels la somme des parties en poids A) à D) s'élève à 100, dont le poids moléculaire moyen $M_{GPC}$ mesuré par chromatographie de perméation de gel se situe entre 30 000 et 80 000, dont la proportion de constituants à poids moléculaire inférieur ayant des poids moléculaires au maximum de 3000 est de 3 à 15% en poids par rapport à la quantité totale du copolymère, dont la non-uniformité moléculaire $U = Mw/Mn - 1$ est de 1,0 à 10,0 et dont le paramètre $\sigma_i$ pour l'hétérogénéité chimique du copolymère se situe entre 0 et 0,06.

2. Procédé selon la revendication 1, caractérisé en ce qu'on choisit les rapports quantitatifs des composants individuels de l'agent de revêtement pour qu'il y ait un rapport d'équivalence, entre groupes isocyanate éventuellement bloqués et groupes réactifs envers les groupes isocyanate, de 0,2 : 1 à 5 : 1.

3. Procédé selon la revendication 1, caractérisé en ce qu'on utilise comme résines polyacryliques polyhydroxylées des copolymères de

A)  11 à 19 parties en poids de (méth)acrylate de 2-hydroxyéthyle, de (méth)acrylate de 2- ou 3-hydro-
    xypropyle et/ou de (méth)acrylate d'hydroxybutyle,
B)  60 à 75 parties en poids de méthacrylate de méthyle,
C)  10 à 25 parties en poids d'acrylate de 2-éthylhexyle et
D)  0,5 à 1,5 partie en poids d'acide (méth)acrylique

pour lesquels la somme des parties en poids A) à D) s'élève à 100.

4. Procédé selon les revendications 1 à 3, caractérisé en ce qu'on utilise des polyacrylates polyhy-droxylés dont le poids moléculaire $M_{GPC}$ se situe entre 40 000 et 70 000, dans lesquels la proportion de constituants à poids moléculaire inférieur ayant un poids moléculaire au maximum de 3000, s'élève à 5 à 10% en poids par rapport à la quantité totale du copolymère, dont la non-uniformité moléculaire U se situe entre 2,0 et 6,0 et pour lesquels le paramètre $\sigma_i$ se situe entre 0,01 et 0,05.